# EUROPÄISCHE PATENTSCHRIFT

(11) **EP 3 722 041 B1**
(45) Veröffentlichungstag und Bekanntmachung des Hinweises auf die Patenterteilung: **27.12.2023**
(21) Anmeldenummer: 20160830.4
(22) Anmeldetag: 04.03.2020
(51) Int. Cl.: B23K 11/24

(54) **WIDERSTANDSSCHWEISSVORRICHTUNG UND WIDERSTANDSSCHWEISSVERFAHREN ZUM WIDERSTANDSSCHWEISSEN VON MINDESTENS EINEM BAUTEIL**
RESISTANCE WELDING DEVICE AND RESISTANCE WELDING METHOD FOR RESISTANCE WELDING OF AT LEAST ONE COMPONENT
DISPOSITIF DE SOUDAGE PAR RÉSISTANCE ET PROCÉDÉ DE SOUDAGE PAR RÉSISTANCE PERMETTANT DE SOUDER PAR RÉSISTANCE AU MOINS UN COMPOSANT

(30) Priorität: 09.04.2019 DE 102019205037
(43) Veröffentlichungstag der Anmeldung: 14.10.2020
(73) Patentinhaber: Robert Bosch GmbH, 70442 Stuttgart (DE)
(72) Erfinder: Scholz, Reinhard, 64711 Erbach (DE)

(56) Entgegenhaltungen:
- EP-A1- 3 181 284
- EP-A1- 3 584 029
- WO-A1-2013/063628
- DE-A1-102015 225 038

## Beschreibung

Die vorliegende Erfindung bezieht sich auf eine Widerstandsschweißvorrichtung und ein Widerstandsschweißverfahren zum Widerstandsschweißen von mindestens einem Bauteil.

Widerstandsschweißen von verschiedenen Blechkombinationen wird beispielsweise in der automatisierten Fahrzeugfertigung eingesetzt, bei welcher Schweißvorrichtungen Schweißverbindungen an beispielsweise einer Karosserie eines Fahrzeugs, wie Kraftfahrzeug, Lastkraftwagen, Flugzeug, usw., herstellen. Hier, wie auch in anderen Fertigungsanlagen, wie beispielsweise Fertigungsstraßen für Möbel, Heizkörper, usw., werden metallische Teile durch Schweißen mit Hilfe eines Schweißwerkzeugs der Schweißvorrichtung verbunden.

Zudem kann eine Schweißvorrichtung, insbesondere eine Widerstandsschweißvorrichtung, auch in der Einzelfertigung zum Einsatz kommen.

Durch den Gleichstrom beim Schweißen kann Magnetisierung der geschweißten Teile auftreten. In Folge dessen wird die Weiterverarbeitung der geschweißten metallischen Teile erschwert.

Durch die mögliche Magnetisierung von Anlagenteilen kann es zu Verschmutzung und Fehlfunktionen in der Schweißanlage kommen.

Außerdem kann es durch verschiedene Legierungen für die geschweißten Bleche, verschiedene Blechdickenkombinationen und dem Peltiereffekt bei Aluminium schweißstromrichtungsabhängig zu unerwünschtem Abbrand an den Schweißelektroden bzw. Materialwanderung kommen.

Diese Effekte treten zudem insbesondere beim Widerstandsschweißen von Kettengliedern und beim Schweißen von Heizkörpern auf.

Um die Magnetisierungseffekte zu vermeiden, könnte es überlegt werden, einen Gleichrichter mit vier Thyristoren anstelle eines herkömmlichen Diodengleichrichters zu verwenden, der üblicherweise bei der Widerstandsschweißvorrichtung für die Bereitstellung des Schweißstroms verbaut ist.

Nachteilig an einer derartigen Lösung ist jedoch, dass der Gleichrichter mit vier Thyristoren im Vergleich zu dem Diodengleichrichter zum einen den doppelten Bauraum benötigt. Durch den doppelten Bauraum wird der Gleichrichter mit vier Thyristoren sehr unhandlich und ineffizient in der Handhabung. Dies ist nicht nur bei einer Vorrichtung zur Bewegung der Widerstandsschweißvorrichtung im Raum, wie beispielsweise einem Roboter, nachteilig.

Zum anderen legt der Gleichrichter mit vier Thyristoren im Vergleich zu dem Diodengleichrichter schlechtere Betriebseigenschaften an den Tag, da der Gleichrichter mit vier Thyristoren höhere Verluste und eine geringere Leistung hat. Die schlechteren Betriebseigenschaften sind im Hinblick auf den schonenden Einsatz von Ressourcen unerwünscht. Zudem verursachen die schlechteren Betriebseigenschaften für den Betreiber der Widerstandsschweißvorrichtung höhere Kosten.

WO 2013/063628 A1 zeigt eine Widerstandsschweißvorrichtung mit einer an der Schweißzange angeordneten Stromquelle, die einen Hochstromtransformator aufweist. Auf der Sekundärseite des Transformators werden Transistoren verwendet.

EP 3 181 284 A1 betrifft eine Stromrichterschaltung zur Bereitstellung eines Starkstromes, insbesondere eines elektrischen Stromes, wie er beispielsweise beim Widerstandsschweißen benötigt wird. Auf der Sekundärseite eines Schweißtransformators sind Transistoren angeordnet.

Möglich ist außerdem, wie in der DE 10 2015 225 038 A1 oder der EP 3 584 029 A1 beschrieben, dass eine Polaritätsumschaltung der Schweißspannung für das Schweißwerkzeug vorgenommen wird. In einem solchen Fall ist jedoch zwischen dem Schweißtransformator, der bei einem, insbesondere robotergeführten, Schweißwerkzeug angebracht ist, und einem Umrichter bei einer ortsfest vorgesehenen Schweißsteuerung ein elektrisches Kabel vorzusehen. Über das Kabel kann ein 24V-Signal gesendet werden, mit welchem die Polarität der Schweißspannung variiert wird. Diese zusätzliche Kabelverbindung über den Roboter birgt prinzipbedingt ein hohes Risiko bezüglich beispielsweise Kabeldefekt, insbesondere Kabelbruch, und/oder offener Stecker am Transformator und/oder Kabeltausch. Dadurch ist es erforderlich, vom Transformator zusätzlich ein Rückmeldesignal zurück an die Schweißsteuerung zu geben und eine Überwachung dieses Rückmeldesignals im Transformator und/oder der Steuerung zu realisieren. Diese Überwachung hat auch einen Qualitätssicherungsaspekt für die Festigkeit des Schweißpunktes. Sind mehrere Transformatoren parallel zu schalten, sind auch alle Transformatoren an die zusätzlichen elektrischen Kabel anzuschließen. Dies bedeutet einen großen Platzbedarf für entsprechende Anschlüsse an den Transformatoren und einen großen Verkabel ungsaufwand.

Daher ist es Aufgabe der vorliegenden Erfindung, eine Widerstandsschweißvorrichtung und ein Widerstandsschweißverfahren zum Widerstandsschweißen von mindestens einem Bauteil bereitzustellen, mit welchen die zuvor genannten Probleme gelöst werden können. Insbesondere sollen eine Widerstandsschweißvorrichtung und ein Widerstandsschweißverfahren zum Widerstandsschweißen von mindestens einem Bauteil bereitgestellt werden, bei welchen der störende Magnetisierungseffekt sehr effizient, unaufwändig, kostengünstig und mit hoher Sicherheit vermieden wird.

Diese Aufgabe wird durch eine Widerstandsschweißvorrichtung zum Widerstandsschweißen von mindestens einem Bauteil nach Anspruch 1 gelöst. Die Widerstandsschweißvorrichtung hat ein Schweißwerkzeug mit mindestens einer Schweißelektrode, welche zum Schweißen mit dem mindestens einen Bauteil zu kontaktieren ist, mindestens einen Schweißtransformator zum Zuführen eines elektrischen Stroms zu dem Schweißwerkzeug beim Schweißen des mindestens einen Bauteils, eine Reihenschaltung aus zwei Transistoren, die zwischen das Schweißwerkzeug und einen Ausgang des Schweißtransformators geschaltet sind, und eine Steuereinrichtung zur Steuerung der Polarität des mindestens einen Schweißtransformators durch Senden von Polaritätsinformationen an den mindestens einen Schweißtransformator, wobei die Polarität des einen Transistors der Reihenschaltung gegenüber der Polarität des anderen Transistors der Reihenschaltung gedreht ist, so dass die Polarität des mindestens einen Schweißtransformators umschaltbar ist, um an dem Schweißtransformator eine polaritätsumschaltbare Schweißspannung und einen polaritätsumschaltbaren Schweißstrom zu realisieren, wie in Anspruch 1 beschrieben.

Bei der Widerstandsschweißvorrichtung ist kein zusätzliches Kabel zwischen der ortsfesten Schweißsteuerung und einem Schweißtransformator zu verlegen, um eine Polaritätsumschaltung des Transformators der Schweißvorrichtung zu realisieren. Dies bedeutet einen großen Vorteil, da der Schweißtransformator üblicherweise zusammen mit dem Schweißwerkzeug im Raum bewegt wird. Dadurch ist ein Aufbau des Schweißtransformators in kleiner Baugröße und mit geringen Verlusten realisierbar, ohne dass dadurch Sicherheitseinbußen hinzunehmen sind. Der Schweißtransformator ist vorzugsweise als Mittelfrequenz-Gleichstrom-Transformator (MF-DC-Transformator) ausgeführt und wird auch als Transformator-Gleichrichtereinheit bezeichnet.

Mit dem beschriebenen Aufbau kann der bei einem herkömmlichen Diodengleichrichter entstehende störende Magnetisierungseffekt mit der beschriebenen Widerstandsschweißvorrichtung sehr effizient, unaufwändig, kostengünstig und mit hoher Sicherheit vermieden werden.

Die in den Ansprüchen beanspruchte Widerstandsschweißvorrichtung hat geringere Verluste und einen kleineren Bauraum jedoch eine höhere Leistung als die zuvor beschriebene Thyristor-Lösung. Außerdem hat die in den Ansprüchen beanspruchte Widerstandsschweißvorrichtung eine ähnliche Leistungsfähigkeit und ähnlichen Bauraum jedoch geringere Verluste als ein MF-DC-Transformator mit einem Diodengleichrichter nach dem Stand der Technik.

Insgesamt kann mit der in den Ansprüchen beanspruchten Widerstandsschweißvorrichtung eine unaufwändige ausführbare und überprüfbare Polaritätsumschaltung eines Schweißtransformators in kleiner Baugröße, mit geringen Verlusten und geringem Aufwand realisiert werden. Vorteilhafte weitere Ausgestaltungen der Vorrichtung sind in den abhängigen Ansprüchen angegeben.

Erfindungsgemäß ist die Steuereinrichtung ausgestaltet, die Polaritätsinformation in einer Spannung bereitzustellen, die an die Primärseite des mindestens einen Schweißtransformators angelegt wird. Denkbar ist, dass die Steuereinrichtung ausgestaltet ist, Polaritätsinformationen als digitales Signal bereitzustellen.

In einer Ausgestaltung sind die Steuereinrichtung und der mindestens eine Schweißtransformator zusätzlich zu einer Verbindung für die Spannung, die an die Primärseite des mindestens einen Schweißtransformators anzulegen ist, über mindestens eine Leitung verbindbar, wobei die Steuereinrichtung ausgestaltet ist, Polaritätsinformationen über die mindestens eine Leitung an das Polaritätsschaltmodul (35) zum Schalten der Polarität des mindestens einen Schweißtransformators zu senden.

Der mindestens eine Schweißtransformator weist erfindungsgemäß das Polaritätsschaltmodul auf, das zur Auswertung der Polaritätsinformation ausgestaltet ist.

Optional ist der mindestens eine Schweißtransformator aus einer Parallelschaltung von mindestens zwei Transformatoren gebildet.

Hierbei ist die Polaritätsumschalteinrichtung möglicherweise ausgestaltet, alle parallel geschalteten mindestens zwei Transformatoren immer in die gleiche Polarität zu schalten.

Möglich ist auch, dass die Widerstandsschweißvorrichtung zudem mit einer Erfassungseinrichtung zur Erfassung einer Spannung zwischen den zwei Schweißelektroden beim Schweißen mit dem Schweißwerkzeug, wobei die Steuereinrichtung ausgestaltet ist, die Umschaltung der Polarität durch einen Vergleich der von der Erfassungseinrichtung erfassten Spannung mit einem vorbestimmten Referenzwert der Spannung zu prüfen.

Der Schweißtransformator kann zwei Ausgänge haben, an welchen jeweils eine Reihenschaltung aus zwei Transistoren vor das Schweißwerkzeug geschaltet ist.

Die zwei Transistoren sind optional Metall-Oxid-Halbleiter-Feldeffekttransistoren.

In einer Ausgestaltung ist das Schweißwerkzeug eine Schweißzange mit zwei Schweißelektroden, zwischen welchen das mindestens eine Bauteil beim Schweißen angeordnet ist.

Die zuvor beschriebene Widerstandsschweißvorrichtung kann Teil einer Anlage sein, die zur Behandlung von Gegenständen vorgesehen ist. Hierbei kann die Widerstandsschweißvorrichtung zum Widerstandsschweißen von mindestens einem Bauteil vorgesehen sein, das zur Behandlung von mindestens einem der Gegenstände vorgesehen ist. Die Anlage kann zur Fertigung von Fahrzeugrohkarossen oder Heizkörpern oder Ketten als Gegenstände ausgestaltet sein.

Die Aufgabe wird zudem durch ein Widerstandsschweißverfahren zum Widerstandsschweißen von mindestens einem Bauteil nach Anspruch 14 gelöst. Das Widerstandsschweißverfahren wird mit einer Widerstandsschweißvorrichtung ausgeführt, die ein Schweißwerkzeug mit mindestens einer Schweißelektrode, welche zum Schweißen mit dem mindestens einen Bauteil zu kontaktieren ist, mindestens einen Schweißtransformator zum Zuführen eines elektrischen Stroms zu dem Schweißwerkzeug beim Schweißen des mindestens einen Bauteils, eine Reihenschaltung aus zwei Transistoren, die zwischen das Schweißwerkzeug und einen Ausgang des Schweißtransformators geschaltet sind, und eine Steuereinrichtung aufweist. Hierbei weist das Widerstandsschweißverfahren die Schritte auf: Senden, mit der Steuereinrichtung, von Polaritätsinformationen an den mindestens einen Schweißtransformator, um die Polarität des mindestens einen Schweißtransformators zu steuern, Schalten der Polarität der zwei Transistoren indem einer der Transistoren in Abhängigkeit der Polaritätsinformationen eingeschaltet wird, und positiv leitend Einschalten des in Reihe zu dem eingeschalteten Transistor geschalteten Transistors im Synchronbetrieb bei Strom, wodurch die Polarität des einen Transistors der Reihenschaltung gegenüber der Polarität des anderen Transistors der Reihenschaltung gedreht ist, um an dem Schweißtransformator eine polaritätsumschaltbare Schweißspannung und einen polaritätsumschaltbaren Schweißstrom zu realisieren, wie in Anspruch 14 beschrieben.

Das Widerstandsschweißverfahren erzielt die gleichen Vorteile, wie sie zuvor in Bezug auf die Widerstandsschweißvorrichtung genannt sind. Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen, jeweils im Rahmen der angehängten Ansprüche.

Dabei wird der Fachmann auch Einzelaspekte als Verbesserungen oder Ergänzungen zu der jeweiligen Grundform der Erfindung, wie in den Ansprüchen definiert, hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Anlage mit einer Widerstandsschweißvorrichtung gemäß einem ersten Ausführungsbeispiel;
Fig. 2 ein erstes Beispiel für den ersten Teil des Verlaufs einer Netzversorgungsspannung für einen Schweißtransformator der Widerstandsschweißvorrichtung gemäß dem ersten Ausführungsbeispiel;
Fig. 3 ein zweites Beispiel für den ersten Teil des Verlaufs einer Netzversorgungsspannung für einen Schweißtransformator der Widerstandsschweißvorrichtung gemäß dem ersten Ausführungsbeispiel;
Fig. 4 ein Blockschaltbild einer Parallelschaltung von Transformatoren einer Widerstandsschweißvorrichtung gemäß einem zweiten Ausführungsbeispiel;
Fig. 5 ein Blockschaltbild einer Parallelschaltung von Transformatoren einer Widerstandsschweißvorrichtung gemäß einer Modifikation einem dritten Ausführungsbeispiel; und
Fig. 6 ein Blockschaltbild einer Anlage mit einer Widerstandsschweißvorrichtung gemäß einem vierten Ausführungsbeispiel.

In den Figuren sind gleiche oder funktionsgleiche Elemente, sofern nichts anderes angegeben ist, mit denselben Bezugszeichen versehen.

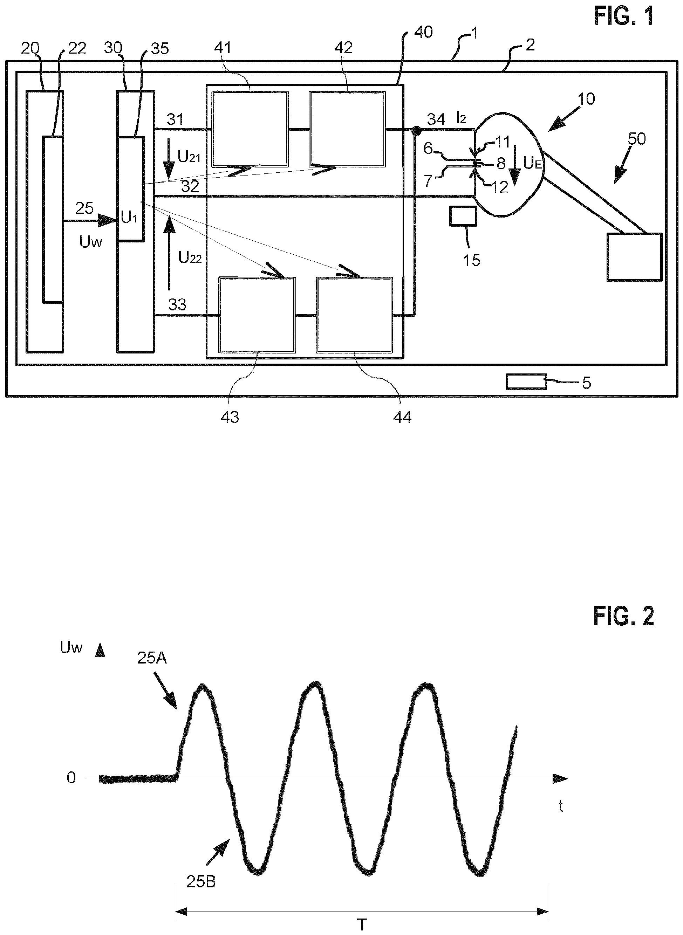

Fig. 1 zeigt sehr schematisch eine Anlage 1 mit einer Widerstandsschweißvorrichtung 2. Die Anlage 1 kann beispielsweise eine Fertigungsanlage für Gegenstände 5, wie Fahrzeuge, Möbel, Heizkörper, usw. sein.

In der Fertigungsanlage 1 können metallische Bauteile 6, 7 durch Widerstandsschweißen derart verbunden werden, dass eine Schweißverbindung 8 hergestellt wird. Es ist hierbei möglich, dass beispielsweise zwei Kanten eines einzigen Bauteils 6 durch Widerstandsschweißen mit einer oder mehreren Schweißverbindungen 8 miteinander verbunden werden. Unabhängig davon wie viele Bauteile 6, 7 mit einer Schweißverbindung 8 miteinander verbunden werden, kann/können die Schweißverbindung(en) 8 eine Punktschweißung oder eine Schweißnaht oder Kombinationen daraus sein.

Zum Schweißen weist die Widerstandsschweißvorrichtung 2 ein Schweißwerkzeug 10 in Form einer Schweißzange mit zwei Schweißelektroden 11, 12, eine Erfassungseinrichtung 15, die an dem Schweißwerkzeug 10 für eine Erfassung einer Elektrodenspannung U_{E} angeordnet ist, eine Schweißsteuerung bzw. Steuereinrichtung 20 mit einem damit verbundenen Umrichter 22 mit einem Ausgang 25, einen Schweißtransformator 30 mit drei Ausgängen 31, 32, 33 und einer Auswerteeinheit 35, einen Gleichrichterzweig bzw. eine Gleichrichterschaltung 40 aus einem ersten Transistor 41, einem zweiten Transistor 42, einem dritten Transistor 43, einem vierten Transistor 44, und eine Vorrichtung 50 zum Führen des Schweißwerkzeugs 10 auf.

Die Widerstandsschweißvorrichtung 2 kann unter Steuerung der Steuereinrichtung 20 mit dem Schweißwerkzeug 10 eine Schweißverbindung 8 herstellen. Hierfür liefert der Umrichter 22 an seinem Ausgang eine Wechselspannung U_{W} zur Leistungsversorgung des Transformators 30. Die Wechselspannung U_{W} liegt an der Primärseite des Transformators 30 an einem Eingang U₁ des Transformators 30 an. Die Wechselspannung Uw dient zur Leistungsversorgung des Transformators 30 zur Bereitstellung eines Schweißstroms I2.

An der Sekundärseite des Schweißtransformators 30 liegt eine erste Sekundärspannung U21 zwischen dem ersten und zweiten Ausgang 31, 32 des Schweißtransformators 30 an. Außerdem liegt eine zweite Sekundärspannung U22 zwischen dem zweiten und dritten Ausgang 32, 33 des Schweißtransformators 30 an. Die erste Sekundärspannung U21 und die zweite Sekundärspannung U22 bilden eine Schweißspannung U21, U22, welche den Schweißstrom I2 zur Folge hat.

An dem ersten Ausgang 31 des Schweißtransformators 30 ist der erste Transistor 41 angeschlossen. Zu dem ersten Transistor 41 ist ein zweiter Transistor 42 in Reihe geschaltet. Dadurch ist die Reihenschaltung aus erstem und zweitem Transistor 41, 42 zwischen den Schweißtransformator 30 und das Schweißwerkzeug 10 geschaltet. Genauer gesagt, ist die Reihenschaltung aus erstem und zweitem Transistor 41, 42 zwischen den Schweißtransformator 30 und die erste Schweißelektrode 11 geschaltet.

Mit dem zweiten Ausgang 32 des Schweißtransformators 30 ist die zweite Schweißelektrode 12 direkt verbunden.

An dem dritten Ausgang 32 des Schweißtransformators 30 ist der dritte Transistor 43 angeschlossen. Zu dem dritten Transistor 43 ist ein vierter Transistor 44 in Reihe geschaltet. Dadurch ist die Reihenschaltung aus drittem und viertem Transistor 43, 44 zwischen den Schweißtransformator 30 und das Schweißwerkzeug 10 geschaltet. Genauer gesagt, ist die Reihenschaltung aus drittem und viertem Transistor 43, 44 zwischen den Schweißtransformator 30 und die erste Schweißelektrode 11 geschaltet.

Die Steuereinrichtung 20 kann mit Hilfe der Wechselspannung U_{W}, die in Fig. 2 über der Zeit t dargestellt ist, zusammen mit dem Polaritätsschaltmodul 35 des Transformators 30 die Transistoren 41, 42, 43, 44 zum Ändern der Polarität des Transformators 30 schalten, wie nachfolgend beschrieben. Gemäß Fig. 2 hat die Wechselspannung U_{W} hierfür Polaritätsinformation 25A, 25B, also Information darüber, wie die Polarität des Transformators 30 zu schalten ist.

Das Polaritätsschaltmodul 35 wertet zum Schalten der Polarität des Transformators 30 die Polaritätsinformation 25A, 25B der Wechselspannung Uw aus. Das Polaritätsschaltmodul 35 kann die Auswertung zumindest teilweise mit Hilfe von Software ausführen, die auf dem Polaritätsschaltmodul 35 abläuft.

Beispielsweise ist das Polaritätsschaltmodul 35 derart eingestellt, dass bei der Auswertung der Polaritätsinformation 25A, 25B der Wechselspannung U_{W} davon ausgegangen wird, dass zu Beginn einer Schweißzeit T der erste Leistungsimpuls vom Umrichter 22 zum Transformator 30 immer als positive Spannung U_{W} auf den Anschluss U₁ an der Primärseite des Transformators 30 ausgeführt wird, wie in Fig. 2 gezeigt. In einer Ausgestaltung kann diese positive Spannung U_{W}, welche die Polaritätsinformation 25A bildet, vom Umrichter 22 und/oder dem Polaritätsschaltmodul 35 derart ausgewertet werden, dass für den Transformator 30 eine positive Polarität zu schalten ist. Demzufolge steuert das Polaritätsschaltmodul 35 die Transistoren 41, 42, 43, 44 an, um die vorgegebene positive Polarität des Transformators 30 einzustellen.

Bei einer ersten negativen Spannung U_{W} am Anschluss U₁ an der Primärseite des Transformators 30 kann diese negative Spannung von dem Polaritätsschaltmodul 35 als negative Ausgangsspannung Uw der Steuereinrichtung 20 erkannt werden. Die erste negative Spannung U_{W} bildet also die Polaritätsinformation 25B, wie in Fig. 2 dargestellt. Demzufolge steuert das Polaritätsschaltmodul 35 die Transistoren 41, 42, 43, 44 an, um den Transformator 30 von der positiven Polarität auf die nun vorgegebene negative Polarität des Transformators 30 einzustellen.

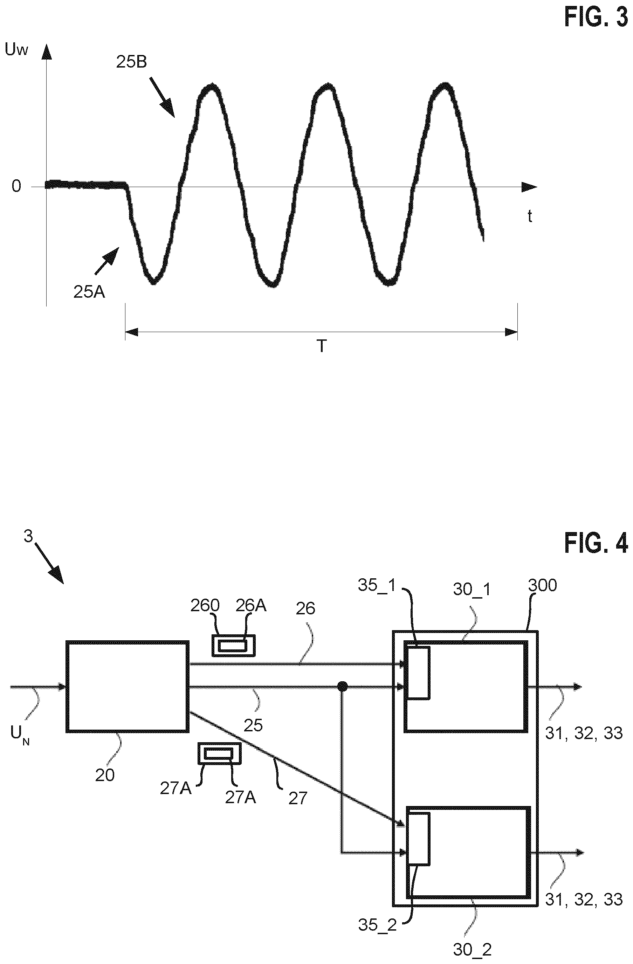

Fig. 3 zeigt eine Alternative zu der Spannung U_{W} von Fig. 2. Bei der Alternative gemäß Fig. 3 ist das Polaritätsschaltmodul 35 derart eingestellt, dass bei der Auswertung der Polaritätsinformation 25A, 25B der Wechselspannung U_{W} davon ausgegangen wird, dass zu Beginn einer Schweißzeit T der erste Leistungsimpuls vom Umrichter 22 zum Transformator 30 immer als negative Spannung Uw auf den Anschluss U₁ an der Primärseite des Transformators 30 ausgeführt wird. Demzufolge kann die Polarität des Transformators 30 entsprechend geschaltet werden, wie in dem Polaritätsschaltmodul 35 voreingestellt ist.

Die Steuereinrichtung 20 von Fig. 1 kann somit durch entsprechende Wahl der Polarität der Wechselspannung Uw vorgeben, wie die Polarität des Transformators 30 geschaltet werden soll. Die Ansteuerung der Transistoren 41 bis 44 erfolgt dann durch das Polaritätsschaltmodul 35, das die Polarität der Wechselspannung U_{W} auswertet. Das Polaritätsschaltmodul 35 ist ausgestaltet, jeweils in Abhängigkeit der Wechselspannung U_{W} und der Polaritätsvorwahl einen Transistor der Transistoren 41, 42, 43, 44 einzuschalten. Der in Reihe geschaltete Transistor der Transistoren 41, 42, 43, 44 wird im Synchronbetrieb bei Strom dann negativ leitend eingeschaltet.

Beispielsweise schaltet die Steuereinrichtung 20 den ersten Transistor 41 jeweils in Abhängigkeit der Ausgangsspannung und der Polaritätsvorwahl ein. Der in Reihe geschaltete zweite Transistor 42 wird im Synchronbetrieb bei Strom dann negativ leitend eingeschaltet.

Prinzipiell gilt, das Transistorpärchen für die Polaritätswahl ist positiv leitend, das Transistorpärchen für die Synchrongleichrichtung negativ leitend. Bei dem obigen Beispiel gilt also, die Transistoren 41, 43 für die Polaritätswahl sind positiv leitend, die Transistoren 42, 44 für die Synchrongleichrichtung sind negativ leitend. Wird keine Polumschaltung benötigt, können die Transistoren 41, 43 aus Fig. 1 entfallen. Alternativ können die Transistoren 42, 44 aus Fig. 1 entfallen.

Insbesondere sind die Transistoren 41, 42 N-Kanal MOSFETs. Dasselbe gilt für die Transistoren 43, 44.

Dadurch sind im Gleichrichterzweig bzw. der Gleichrichterschaltung 40 pro Gleichrichter dann zwei Transistoren, nämlich bei dem Beispiel die Transistoren 41, 42, in Reihe eingeschaltet. Dasselbe gilt in gleicher Weise für die Reihenschaltung aus drittem und viertem Transistor 43, 44 als weiteren Gleichrichter des Gleichrichtzweigs bzw. der Gleichrichterschaltung 40.

Auf diese Weise kann an dem Schweißtransformator 30 eine polaritätsumschaltbare Schweißspannung U21, U22 und ein polaritätsumschaltbarer Schweißstrom I2 realisiert werden.

Somit ist die Polaritätsinformation 25A, 25B mit dem Leistungsanschluss des Transformators 30 verknüpft. Dadurch ist kein Kabel zwischen einem zusätzlichen 24V-Ausgang am Umrichter 22 und einem entsprechenden Eingang am Transformator 39 für die Polumschaltung erforderlich. Noch dazu kann auf das Rückmeldesignal zur Mitteilung der Ist-Polarität des Transformators 30 aufgrund der Auswertung durch das Polaritätsmodul 35 verzichtet werden. Stattdessen ist mit der Erfassungseinrichtung 15 eine Polaritätsüberwachung durch den polrichtigen Anschluss der standardmäßig vorhandenen Erfassung der Elektrodenspannung U_{E} beim Schweißen auf Basis einer Referenzwerterfassung möglich, die bei der Inbetriebnahme vorgenommen wird. Mit anderen Worten, kann das Polaritätsmodul 35 und/oder die Steuereinrichtung 20 mit Hilfe der Erfassungseinrichtung 15 die Polaritätsüberwachung mittels einer Erfassung des Istwerts der Spannung U_{E} an den Elektroden 11, 12 beim Schweißen und dem Vergleich des Istwerts der Spannung U_{E} mit dem zugehörigen Referenzwert der Spannung U_{E} an den Elektroden 11, 12 durchführen. Der Referenzwert kann in dem Polaritätsmodul 35 und/oder der Steuereinrichtung 20 gespeichert sein.

Unabhängig von den beiden Varianten gemäß Fig. 2 und Fig. 3 wird bei der Steuerung mit Hilfe der Steuereinrichtung 20 außerdem beim Schweißen von unterschiedlich dicken Bauteilen, wie Blechen, usw., folgendermaßen vorgegangen. Hierbei ergeben sich insbesondere bei Aluminiumblechen, jedoch nicht ausschließlich bei solchen Bauteilen, große Vorteile, wie nachfolgend beschrieben.

Bei solchen Bauteilen steuert die Steuereinrichtung 20 die Polumschaltung derart, dass die positive Elektrode des Schweißwerkzeugs 10 am beispielsweise dickeren Bauteil 6 und die negative Elektrode des Schweißwerkzeugs 10 am dünneren Bauteil 7 anliegt. Dadurch wird die Schweißlinse bzw. die Schweißverbindung 8 mehr in das dickere Bauteil 6 gezogen, da beim Schweißen die positive Elektrode bzw. die daran angebrachte Elektrodenkappe immer heißer als die negative Elektrode bzw. die daran angebrachte Elektrodenkappe ist und außerdem das dünnere Bauteil 7 grundsätzlich heißer als das dickere Bauteil 6 wird. Dadurch zieht sich der heißeste Punkt bei der Schweißung immer in Richtung positive Elektrode, also hier das dickere Bauteil 6, an welcher die positive Elektrode anliegt.

Somit können mit Hilfe einer derart gesteuerten Polumschaltung schnell und zuverlässig die Elektroden 11, 12 des Schweißwerkzeugs 10 von negativ nach positiv oder zurückgeschaltet werden, je nachdem welches Bauteil 6, 7 welcher Elektrode 11, 12 des Schweißwerkzeugs 10 zugeordnet ist, um Schweißverbindungen 7 hoher Qualität herzustellen. Damit ist eine Drehung des Schweißwerkzeugs 10 von Schweißstelle zu Schweißstelle nicht erforderlich. Dies ist besonders vorteilhaft, da eine Drehung des Schweißwerkzeugs 10 zeitaufwändig und steuerungsintensiv, also damit kostenintensiv ist. Außerdem ist eine Drehung des Schweißwerkzeugs 10 gegebenenfalls mit hohem Kollisionsrisiko verbunden oder sogar wegen beengter Platzverhältnisse am Bauteil gar nicht möglich.

Ein weiterer Vorteil der zuvor beschriebenen Steuerung durch die Steuereinrichtung 20 besteht darin, dass durch die Polumschaltung der Kappenabbrand an den Elektroden 11, 12 gleichmäßig eingestellt wird. An der heißeren positiven Elektrode entsteht nämlich jeweils ein größerer Kappenabbrand als an der negativen Elektrode. Die Kappen sind bei Erreichen eines maximalen Abbrandes abzufräsen und nach mehrmaligem Fräsen zu wechseln, was Stillstände in der Fertigung verursacht. Da durch die Polumschaltung jede der Elektroden 11, 12 je nach Bedarf als positive Elektrode oder als negative Elektrode geschaltet ist, muss seltener gefräst werden und die Kappen sind seltener zu wechseln. Somit kann durch die beschriebene Steuerung der Steuereinrichtung 20 die Zeit für die Fertigung effektiver genutzt werden. Zudem werden durch den seltener erforderlichen Kappenwechsel wertvolle Ressourcen und Kosten gespart.

Dadurch ist die Widerstandsschweißvorrichtung 2 besonders vorteilhaft bei Blechkombinationen einsetzbar, bei welchen es bei einer Schweißzange als Schweißwerkzeug 10 zum unerwünschtem Abbrand der Schweißelektroden 11, 12 oder Materialwanderung kommt. Außerdem kann die Widerstandsschweißvorrichtung 3 besonders vorteilhaft beim Schweißen von Kettengliedern und beim Schweißen von Heizkörpern verwendet werden.

Fig. 4 zeigt eine Widerstandsschweißvorrichtung 3 gemäß einem zweiten Ausführungsbeispiel. Die Widerstandsschweißvorrichtung 3 ist in vielen Teilen auf die gleiche Weise aufgebaut, wie für die Widerstandsschweißvorrichtung 2 gemäß dem vorangehenden Ausführungsbeispiel beschrieben.

Im Unterschied zur Widerstandsschweißvorrichtung 2 gemäß dem vorangehenden Ausführungsbeispiel hat die Widerstandsschweißvorrichtung 3 gemäß dem vorliegenden Ausführungsbeispiel einen Schweißtransformator 300, der aus einer Parallelschaltung von zwei Transformatoren 30_1, 30_2 aufgebaut ist. Jeder der zwei Transformatoren 30_1, 30_2 kann aufgebaut sein, wie der Transformator 30 gemäß Fig. 1. Jeder der zwei Transformatoren 30_1, 30_2 ist an den Ausgang 25 der Steuereinrichtung 20 angeschlossen.

Der Transformator 30_1 ist zudem über eine Busleitung 26 mit der Steuereinrichtung 20 verbunden. Der Transformator 30_1 ist zudem über eine Busleitung 27 mit der Steuereinrichtung 20 verbunden. Die Busleitungen 26, 27 realisieren einen Bus, über den Daten 260, 270 vorzugsweise in Echtzeit übertragen werden können. In den Daten 260, 270 sind Polaritätsinformationen 26A, 27A übertragbar. Insbesondere wird auf dem Bus mit einem Sercos-Protokoll oder Ethernet-Protokoll, oder einem CAN-Protokoll oder einem beliebigen anderen industriellen Bus kommuniziert.

Gemäß der inzwischen durch DIN ISO/IEC 2382 abgelösten Norm DIN 44300 (Informationsverarbeitung), Teil 9 (Verarbeitungsabläufe) wird unter Echtzeit der Betrieb eines Rechensystems verstanden, bei dem Programme zur Verarbeitung anfallender Daten ständig betriebsbereit sind, derart, dass die Verarbeitungsergebnisse innerhalb einer vorgegebenen Zeitspanne verfügbar sind. Die Daten können je nach Anwendungsfall nach einer zeitlich zufälligen Verteilung oder zu vorherbestimmten Zeitpunkten anfallen. Demzufolge sind die Steuereinrichtung 20 und das Polaritätsschaltmodul 35 derart ausgestaltet, dass durch deren Hardware und Software keine Verzögerungen verursacht werden und auftreten, welche die Einhaltung dieser Bedingungen verhindern. Demzufolge wird die Verarbeitung der Information der Spannung Uw garantiert schnell genug für die Schaltung der Polarität der Transformatoren 30_1, 30_2, 300 ausgeführt, so dass durch die Verarbeitung der Information der Spannung U_{W} keine Verzögerung bei der Abarbeitung eines Schweißvorgangs an dem mindestens einen Bauteils 6, 7 stattfindet.

Somit erfolgt bei dem Transformator 300 die Steuerung der Polarität seiner parallel geschalteten Transformatoren 30_1, 30_2 über die Busleitungen 26, 27. Die über die Busleitungen 26, 27 gesendeten Polaritätsinformationen 26A, 27A sind mit den Polaritätsschaltmodulen 35_1, 35_2 auswertbar. Die Polaritätsinformationen 26A, 27A können auch die Ist-Polarität des zugehörigen Transformators 30_1, 30_2 aufweisen. Die Polarität des jeweiligen Transformators 30_1, 30_2 kann mit den Polaritätsschaltmodulen 35_1, 35_2 geschaltet werden. Hierbei sind die Polaritätsschaltmodule 35_1, 35_2 ausgestaltet, die Polarität der Transformatoren 30_1, 30_2 derart zu schalten, dass die Polarität der Transformatoren 30_1, 30_2 immer gleich ist. Mit der Erfassungseinrichtung 15 ist die Polaritätsüberwachung mittels der standardmäßig vorhandenen Erfassung des Istwerts der Elektrodenspannung U_{E} beim Schweißen und dem Vergleich mit dem Referenzwert der Elektrodenspannung U_{E} an den Elektroden 11, 12 durchführbar.

Die zuvor beschriebene Steuerung der Polarität des Transformators 300 über den polrichtigen Leistungsanschluss 25 stellt eine sehr sichere Lösung im Fall von Transformatorparallelschaltung dar, da jeder Transformator 30_1, 30_2 die gleiche Leistungsversorgung hat.

Infolge dessen ist auch bei der Variante von Fig. 4 kein zusätzlicher Verkabelungsaufwand notwendig, sondern es werden die vorhandenen Busleitungen 26, 27 verwendet, um die Polarität des Transformators 300 zu schalten.

Selbstverständlich ist der Schweißtransformator 300 in einer Modifikation des vorliegenden Ausführungsbeispiels aus einer Parallelschaltung von mehr als zwei Transformatoren 30_1, 30_2 aufbaubar. In diesem Fall sind auch die anderen Transformatoren jeweils an den Bus angeschlossen, der mit den Busleitungen 26, 27 gebildet wird.

Alternativ ist es möglich, die zuvor beschriebene Polaritätsumschaltung mittels der Information 26A, 27A und der Busleitung 26, 27 auch bei dem Transformator 30 von Fig. 1 durchzuführen, also bei dem kein weiterer Transformator parallel geschaltet ist. Hierbei kann eine der Informationen 26A, 27A mittels einer der Busleitungen 26, 27 zusätzlich oder anstelle der Polaritätsinformationen 25A, 25B bereitgestellt und verwendet werden, um die Polaritätsumschaltung auszuführen. Dadurch ist auch eine Redundanz gewährleistbar. Außerdem ist es möglich auszuwählen, ob die Polaritätsinformationen 25A, 25B aus der Spannung Uw oder die Informationen 26A, 27A mittels einer der Busleitungen 26, 27 verwendet werden sollen.

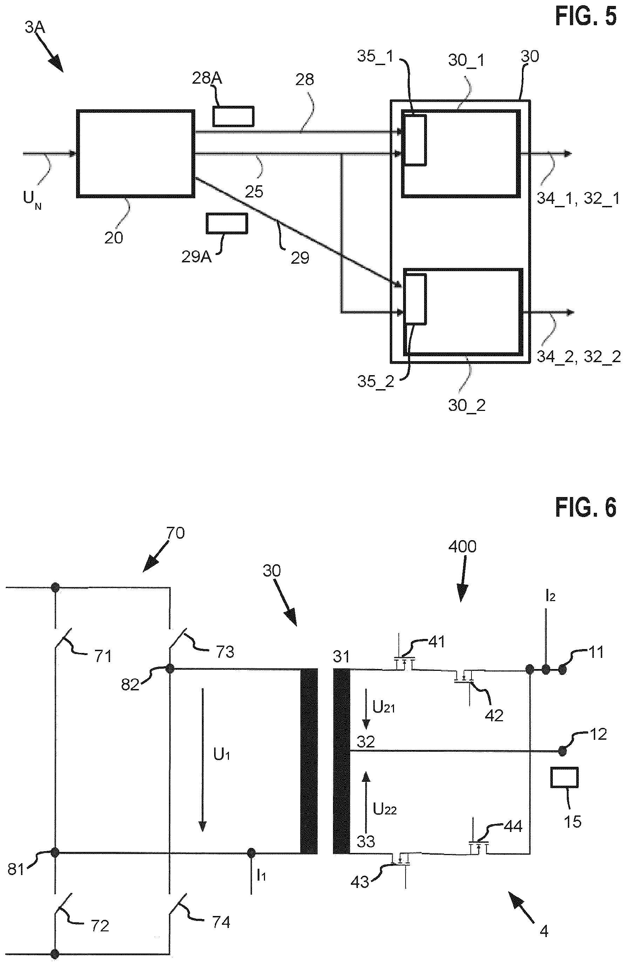

Fig. 5 zeigt eine Widerstandsschweißvorrichtung 3A gemäß einem dritten Ausführungsbeispiel. Die Widerstandsschweißvorrichtung 3A ist in vielen Teilen auf die gleiche Weise aufgebaut, wie für die Widerstandsschweißvorrichtung 3 gemäß dem vorangehenden Ausführungsbeispiel beschrieben.

Im Unterschied zur Widerstandsschweißvorrichtung 3 gemäß dem vorangehenden Ausführungsbeispiel hat die Widerstandsschweißvorrichtung 3A gemäß dem vorliegenden Ausführungsbeispiel diskrete Anschlüsse bzw. Leitungen 28, 29, mit welchen die Steuerung des Polaritätswechsels der Transformatoren 30_1, 30_2 und somit des Transformators 300 realisiert ist. Über die diskreten Anschlüsse bzw. Leitungen 28, 29 werden Polaritätsinformationen 28A, 29A in Form eines digitalen Signals gesendet. Das Signal hat im Verlauf der Zeit t mindestens zwei verschiedene Werte, die einen ausreichenden Abstand haben, um die verschiedenen Polaritäten als Information 28A, 29A zu übertragen.

Durch eine Variante der Transformatoren 30_1, 30_2, 300 kann die Polarität der Transformatoren 30_1, 30_2, 300 beispielsweise bei Fremdsteuerungen diskret angesteuert werden. Dadurch kann auch beispielsweise eine übergeordnete Schweißsteuerung, welche mehrere Schweißwerkzeuge 10 steuert, die Transformatoren 30_1, 30_2, 300 ansteuern. Zudem ist über die zusätzliche Verkabelung, die durch die diskreten Anschlüsse bzw. Leitungen 28, 29 realisiert ist, eine Überwachung der Polarität bzw. deren Umschaltung in der Steuereinrichtung 20 überwachbar.

Ein weiterer Vorteil einer derartigen Steuerung der Polarität der Transformatoren 30_1, 30_2, 300 ist ein einfacher Tausch eines bisherigen MOSFET-Transformators mit seiner 24V Versorgung gegen einen prozessbedingt notwendigen Transformator 30_1, 30_2, 300 mit Polumschaltung. Ein derartiger Austausch ist bei einem entsprechend angepassten Umrichter 22 ohne Änderung eines vorhandenen Kabelpakets der Vorrichtung 10 möglich, da keine zusätzlichen Anschlüsse am Transformator 30_1, 30_2, 300 benötigt werden.

Alternativ ist es möglich, die zuvor beschriebene Polaritätsumschaltung mittels der Information 28A, 29A und der Leitungen 28, 29 auch bei dem Transformator 30 von Fig. 1 durchzuführen. Hierbei kann eine der Informationen 28A, 29A über eine der Leitungen 28, 29 zusätzlich oder anstelle der Polaritätsinformationen 25A, 25B bereitgestellt und verwendet werden, um die Polaritätsumschaltung auszuführen. Dadurch ist auch eine Redundanz gewährleistbar.

Fig. 6 zeigt eine Widerstandsschweißvorrichtung 4 gemäß einem zweiten Ausführungsbeispiel. Die Widerstandsschweißvorrichtung 4 ist in vielen Teilen auf die gleiche Weise aufgebaut, wie für die Widerstandsschweißvorrichtung 2 gemäß dem ersten Ausführungsbeispiel beschrieben.

Im Unterschied zur Widerstandsschweißvorrichtung 2 gemäß dem ersten Ausführungsbeispiel sind bei der Widerstandsschweißvorrichtung 4 gemäß dem vorliegenden Ausführungsbeispiel die Transistoren 41, 42, 43, 44 jeweils speziell als Metall-Oxid-Halbleiter-Feldeffekttransistoren (MOS-FET) ausgestaltet. Die Metall-Oxid-Halbleiter-Feldeffekttransistoren sind bei der Widerstandsschweißvorrichtung 4 antiparallel geschaltet.

Wie in Fig. 6 gezeigt, ergibt sich eine Primärspannung U1 an der Primärseite des Schweißtransformators 30 aus einer Brückenschaltung 70 von Halbleiterschaltern 71, 72, 73, 74. Die Halbleiterschalter 71, 72, 73, 74 können insbesondere jeweils ein Bipolartransistor mit isolierter Gate-Elektrode (IGBT = Insulated-Gate Bipolar Transistor) eines Umrichters sein.

In der Schaltung 70 sind der erste Halbleiterschalter 71 und der zweite Halbleiterschalter 72 in Reihe geschaltet. Zudem sind der dritte Halbleiterschalter 73 und der vierte Halbleiterschalter 74 in Reihe geschaltet. Zwischen einem ersten Verbindungsknoten 81, der zwischen dem ersten und zweiten Halbleiterschalter 71, 72 angeordnet ist, und einem zweiten Verbindungsknoten 82, der zwischen dem dritten und vierten Halbleiterschalter 73, 74 angeordnet ist, bildet sich die Primärspannung U1 an der Primärseite des Schweißtransformators 30 aus.

An der Sekundärseite des Schweißtransformators 30 liegt eine erste Sekundärspannung U21 zwischen dem ersten und zweiten Ausgang 31, 32 des Schweißtransformators 30 an. Außerdem liegt eine zweite Sekundärspannung U22 zwischen dem zweiten und dritten Ausgang 32, 33 des Schweißtransformators 30 an. Die erste Sekundärspannung U21 und die zweite Sekundärspannung U22 bilden die Schweißspannung U21, U22.

Der Schweißtransformator 30 wandelt die Primärspannung U1 in die erste und zweite Sekundärspannung U21, U22. Hierbei ist die Summe der Sekundärspannungen U21, U22 kleiner als der Wert der Primärspannung U1. Zudem wandelt der Schweißtransformator 30 einen Primärstrom I1 auf der Primärseite des Schweißtransformators 30 in den Sekundärstrom I2 auf der Sekundärseite des Schweißtransformators 30 um. Der Sekundärstrom I2, der auch als Schweißstrom bezeichnet werden kann, hat einen höheren Wert als der Primärstrom I1.

Die in Fig. 6 gezeigte Schaltung der Schweißvorrichtung 4 wird von der Steuereinrichtung 20 auf die gleiche Weise geschaltet, wie in Bezug auf das vorangehende Ausführungsbeispiel beschrieben.

Die Schweißvorrichtung 4 kann anstelle der Schweißvorrichtung 2 bei der Anlage 1 gemäß dem ersten Ausführungsbeispiel eingesetzt werden. Insbesondere ist der Gleichrichter 400 auf die gleiche Weise ausgestaltbar, wie in Bezug auf das erste und zweite Ausführungsbeispiel beschrieben. Auch die Schweißvorrichtung 4 kann besonders vorteilhaft bei Blechkombinationen zum Einsatz kommen, bei welchen es bei einer Schweißzange zum unterschiedlich hohen Abbrand der Schweißelektroden kommt. Außerdem kann die Schweißvorrichtung 4 besonders vorteilhaft beim Schweißen von Kettengliedern und beim Schweißen von Heizkörpern verwendet werden.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Transistoren 41, 42, 43, 44 können auch Bipolartransistoren sein, wobei jedoch die Ausführung als Metall-Oxid-Halbleiter-Feldeffekttransistoren (MOS-FET) bevorzugt wird.

Alternativ oder zusätzlich ist es möglich, dass nicht (nur) das Polaritätsmodul 35, sondern auch die Steuereinrichtung 20 ausgestaltet ist, den in Reihe geschalteten Transistor 41, 43 im Synchronbetrieb bei elektrischem Strom negativ leitend einzuschalten.

## Patentansprüche

1. Widerstandsschweißvorrichtung (2; 3; 3A, 4) zum Widerstandsschweißen von mindestens einem Bauteil (6, 7), mit
einem Schweißwerkzeug (10) mit mindestens einer Schweißelektrode (11, 12), welche zum Schweißen mit dem mindestens einen Bauteil (6, 7) zu kontaktieren ist,
mindestens einem Schweißtransformator (30) zum Zuführen eines elektrischen Stroms zu dem Schweißwerkzeug (10) beim Schweißen des mindestens einen Bauteils (6, 7),
einer Reihenschaltung aus zwei Transistoren (41, 42; 43, 44), die zwischen das Schweißwerkzeug (10) und einen Ausgang an der Sekundärseite des Schweißtransformators (30) geschaltet sind,
**dadurch gekennzeichnet, dass** der Schweißtransformator (30)
ein Polaritätsschaltmodul (35) aufweist und die Widerstandsschweißvorrichtung eine Steuereinrichtung (20) aufweist, zur Steuerung der Polarität des mindestens einen Schweißtransformators (30) durch Senden von Polaritätsinformation (25A, 25B; 26A, 27A; 28A, 29A), die mit einem Leistungsanschluss (U₁) an der Primärseite des mindestens einen Schweißtransformators (30) verknüpft ist, an das Polaritätsschaltmodul (35),
wobei die Polaritätsinformation (25A, 25B; 26A, 27A; 28A, 29A) Information darüber ist, wie die Polarität des mindestens einen Schweißtransformators (30) zu schalten ist,
wobei das Polaritätsschaltmodul (35) ausgestaltet ist, die Polaritätsinformation (25A, 25B; 26A, 27A; 28A, 29A) auszuwerten zum Schalten der Polarität des mindestens einen Schweißtransformators (30), und
wobei das Polaritätsschaltmodul (35) ausgestaltet ist, jeweils in Abhängigkeit der Polaritätsinformation (25A, 25B; 26A, 27A; 28A, 29A) und einer in dem Polaritätsschaltmodul (35) voreingestellten Polaritätsvorwahl einen Transistor (41; 43) der Reihenschaltung in Abhängigkeit von dem Auswerteergebnis positiv leitend zu schalten und den anderen Transistor (42; 44) der Reihenschaltung im Synchronbetrieb bei elektrischem Strom zu dem Schweißwerkzeug (10) negativ leitend zu schalten, wodurch die Polarität des einen Transistors (42; 44) der Reihenschaltung gegenüber der Polarität des anderen Transistors (41; 43) der Reihenschaltung gedreht ist, und so dass die Polarität des mindestens einen Schweißtransformators (30) umschaltbar ist, um an dem Schweißtransformator (30) eine polaritätsumschaltbare Schweißspannung (U21, U22) und einen polaritätsumschaltbaren Schweißstrom (I2) zu realisieren.

2. Widerstandsschweißvorrichtung (2; 3; 3A, 4) nach Anspruch 1, wobei die Steuereinrichtung (20) ausgestaltet ist, die Polaritätsinformation (25A, 25B) in einer Spannung (Uw) bereitzustellen, die an die Primärseite des mindestens einen Schweißtransformators (30) angelegt wird.

3. Widerstandsschweißvorrichtung (2; 3; 3A, 4) nach Anspruch 1 oder 2, wobei die Steuereinrichtung (20) ausgestaltet ist, die Polaritätsinformation (26A, 27A) als digitales Signal bereitzustellen.

4. Widerstandsschweißvorrichtung (2; 3; 3A, 4) nach einem der vorangehenden Ansprüche,
wobei die Steuereinrichtung (20) und der mindestens eine Schweißtransformator (30; 300) zusätzlich zu einer Verbindung für die Spannung (Uw), die an die Primärseite des mindestens einen Schweißtransformators (30; 300) anzulegen ist, über mindestens eine Leitung (26, 27; 28, 29) verbunden sind, und
wobei die Steuereinrichtung (20) ausgestaltet ist, die Polaritätsinformation (26A, 27A; 28A, 29A) über die mindestens eine Leitung (26, 27; 28, 29) an das Polaritätsschaltmodul (35) zum Schalten der Polarität des mindestens einen Schweißtransformators (30; 300) zu senden.

5. Widerstandsschweißvorrichtung (2; 3; 3A, 4) nach einem der vorangehenden Ansprüche,
wobei das Polaritätsschaltmodul (35) ausgestaltet ist,
die Polaritätsinformation (25A; 25B) in einem ersten Leistungsimpuls von einem Umrichter (22) zu dem mindestens einen Schweißtransformator (30) zu Beginn einer Schweißzeit (T) zum Herstellen einer Schweißverbindung (8) auszuwerten und die Polarität des mindestens einen Schweißtransformators (30) auf der Grundlage des Auswerteergebnisses zu schalten.

6. Widerstandsschweißvorrichtung (2; 3; 3A, 4) nach einem der vorangehenden Ansprüche, wobei der mindestens eine Schweißtransformator (30) aus einer Parallelschaltung von mindestens zwei Transformatoren (30_1, 30_2) gebildet ist.

7. Widerstandsschweißvorrichtung (2; 3; 3A, 4) nach Anspruch 6,
wobei das Polaritätsschaltmodul (35) ausgestaltet ist, alle parallel geschalteten mindestens zwei Transformatoren (30_1, 30_2) immer in die gleiche Polarität zu schalten.

8. Widerstandsschweißvorrichtung (2; 3; 3A, 4) nach einem der vorangehenden Ansprüche,
zudem mit einer Erfassungseinrichtung (15) zur Erfassung einer Spannung (U_{E}) zwischen den zwei Schweißelektroden (11, 12) beim Schweißen mit dem Schweißwerkzeug (10),
wobei die Steuereinrichtung (20) ausgestaltet ist, die Umschaltung der Polarität durch einen Vergleich der von der Erfassungseinrichtung (15) erfassten Spannung (U_{E}) mit einem vorbestimmten Referenzwert der Spannung (U_{E}) zu prüfen.

9. Widerstandsschweißvorrichtung (2; 3; 3A, 4) einem der vorangehenden Ansprüche, wobei der Schweißtransformator (30) zwei Ausgänge (31, 33) hat, an welchen jeweils eine Reihenschaltung aus zwei Transistoren (41, 42; 43, 44) vor das Schweißwerkzeug (10) geschaltet ist.

10. Widerstandsschweißvorrichtung (2; 3; 3A, 4) nach einem der vorangehenden Ansprüche, wobei die zwei Transistoren (41, 42; 43, 44) Metall-Oxid-Halbleiter-Feldeffekttransistoren sind.

11. Widerstandsschweißvorrichtung (2; 3; 3A, 4) nach einem der vorangehenden Ansprüche, wobei das Schweißwerkzeug (10) eine Schweißzange mit zwei Schweißelektroden (11, 12) ist, zwischen welchen das mindestens eine Bauteil (6, 7) beim Schweißen angeordnet ist.

12. Anlage (1) zur Behandlung von Gegenständen (5), mit
einer Widerstandsschweißvorrichtung (2; 3; 3A, 4) nach einem der vorangehenden Ansprüche,
wobei die Widerstandsschweißvorrichtung (2; 3; 3A, 4) zum Widerstandsschweißen von mindestens einem Bauteil (6, 7) vorgesehen ist, das zur Behandlung von mindestens einem der Gegenstände (5) vorgesehen ist.

13. Anlage (1) nach Anspruch 12, wobei die Anlage (1) zur Fertigung von Fahrzeugrohkarossen oder Heizkörpern oder Ketten als Gegenstände (5) ausgestaltet ist.

14. Widerstandsschweißverfahren zum Widerstandsschweißen von mindestens einem Bauteil (6, 7) mit einer Widerstandsschweißvorrichtung (2; 3; 3A, 4), wobei die Widerstandsschweißvorrichtung (2; 3; 3A, 4) ein Schweißwerkzeug (10) mit mindestens einer Schweißelektrode (11, 12), welche zum Schweißen mit dem mindestens einen Bauteil (6, 7) zu kontaktieren ist, mindestens einen Schweißtransformator (30) zum Zuführen eines elektrischen Stroms zu dem Schweißwerkzeug (30) beim Schweißen des mindestens einen Bauteils (6, 7), eine Reihenschaltung aus zwei Transistoren (41, 42; 43, 44), die zwischen das Schweißwerkzeug (10) und einen Ausgang an der Sekundärseite des Schweißtransformators (30) geschaltet sind, ein Polaritätsschaltmodul (35), und eine Steuereinrichtung (20) aufweist,
**dadurch gekennzeichnet, dass**
das Widerstandsschweißverfahren die Schritte aufweist Senden, mit der Steuereinrichtung (20), von Polaritätsinformation (25A, 25B; 26A, 27A; 28A, 29A), die mit einem Leistungsanschluss (U₁) an der Primärseite des mindestens einen Schweißtransformators (30) verknüpft ist, an das Polaritätsschaltmodul (35), um die Polarität des mindestens einen Schweißtransformators (30) zu steuern, wobei die Polaritätsinformation (25A, 25B; 26A, 27A; 28A, 29A) Information darüber ist, wie die Polarität des mindestens einen Schweißtransformators (30) zu schalten ist, und wobei das Polaritätsschaltmodul (35) ausgestaltet ist, die Polaritätsinformation (25A, 25B; 26A, 27A; 28A, 29A) auszuwerten zum Schalten der Polarität des mindestens einen Schweißtransformators (30), und
Schalten, mit dem Polaritätsschaltmodul (35), der Polarität des Schweißtransformators (30) unter Verwendung der zwei Transistoren (41, 42; 43, 44), indem einer der Transistoren (41; 43) der Reihenschaltung in Abhängigkeit der Polaritätsinformation (25A, 25B; 26A, 27A; 28A, 29A) und einer in dem Polaritätsschaltmodul (35) voreingestellten Polaritätsvorwahl positiv leitend geschaltet wird, und
negativ leitend Schalten des anderen Transistors (42; 44) der Reihenschaltung im Synchronbetrieb bei elektrischem Strom zu dem Schweißwerkzeug (10), wodurch die Polarität des einen Transistors (42; 44) der Reihenschaltung gegenüber der Polarität des anderen Transistors (41; 43) der Reihenschaltung gedreht ist, um an dem Schweißtransformator (30) eine polaritätsumschaltbare Schweißspannung (U21, U22) und einen polaritätsumschaltbaren Schweißstrom (I2) zu realisieren.

## Claims

1. Resistance welding apparatus (2; 3; 3A, 4) for the resistance welding of at least one component (6, 7), comprising
a welding tool (10) comprising at least one welding electrode (11, 12) which is to be contacted with the at least one component (6, 7) for the purpose of welding, at least one welding transformer (30) for feeding an electric current to the welding tool (10) during the welding of the at least one component (6, 7),
a series circuit comprising two transistors (41, 42; 43, 44), which are connected between the welding tool (10) and an output on the secondary side of the welding transformer (30),
**characterized in that** the welding transformer (30) has a polarity switching module (35) and the resistance welding apparatus has a control device (20), for controlling the polarity of the at least one welding transformer (30) by transmitting polarity information (25A, 25B; 26A, 27A; 28A, 29A), which is linked with a power terminal (U₁) on the primary side of the at least one welding transformer (30), to the polarity switching module (35),
wherein the polarity information (25A, 25B; 26A, 27A; 28A, 29A) is information about how the polarity of the at least one welding transformer (30) is to be switched, wherein the polarity switching module (35) is configured to evaluate the polarity information (25A, 25B; 26A, 27A; 28A, 29A) for the purpose of switching the polarity of the at least one welding transformer (30), and
wherein the polarity switching module (35) is configured, in each case depending on the polarity information (25A, 25B; 26A, 27A; 28A, 29A) and a polarity preselection preset in the polarity switching module (35), to switch one transistor (41; 43) of the series circuit in a positively conducting fashion depending on the evaluation result and to switch the other transistor (42; 44) of the series circuit in a negatively conducting fashion during synchronous operation with electric current to the welding tool (10), as a result of which the polarity of said one transistor (42; 44) of the series circuit is rotated relative to the polarity of the other transistor (41; 43) of the series circuit, and such that the polarity of the at least one welding transformer (30) is switchable in order to realize a polarity-switchable welding voltage (U21, U22) and a polarity-switchable welding current (12) at the welding transformer (30).

2. Resistance welding apparatus (2; 3; 3A, 4) according to Claim 1, wherein the control device (20) is configured to provide the polarity information (25A, 25B) in a voltage (U_{W}) that is applied to the primary side of the at least one welding transformer (30).

3. Resistance welding apparatus (2; 3; 3A, 4) according to Claim 1 or 2, wherein the control device (20) is configured to provide the polarity information (26A, 27A) as a digital signal.

4. Resistance welding apparatus (2; 3; 3A, 4) according to any of the preceding claims,
wherein the control device (20) and the at least one welding transformer (30; 300) are connected via at least one line (26, 27; 28, 29) in addition to a connection for the voltage (U_{W}) that is to be applied to the primary side of the at least one welding transformer (30; 300), and
wherein the control device (20) is configured to transmit the polarity information (26A, 27A; 28A, 29A) to the polarity switching module (35) for switching the polarity of the at least one welding transformer (30; 300) via the at least one line (26, 27; 28, 29).

5. Resistance welding apparatus (2; 3; 3A, 4) according to any of the preceding claims,
wherein the power switching module (35) is configured to evaluate the polarity information (25A; 25B) in a first power pulse from a converter (22) to the at least one welding transformer (30) at the beginning of a welding time (T) for producing a welding connection (8) and to switch the polarity of the at least one welding transformer (30) on the basis of the evaluation result.

6. Resistance welding apparatus (2; 3; 3A, 4) according to any of the preceding claims, wherein the at least one welding transformer (30) is formed from a parallel connection of at least two transformers (30_1, 30_2).

7. Resistance welding apparatus (2; 3; 3A, 4) according to Claim 6, wherein the polarity switching module (35) is configured to switch all at least two transformers (30_1, 30_2) connected in parallel always into the same polarity.

8. Resistance welding apparatus (2; 3; 3A, 4) according to any of the preceding claims,
additionally comprising a detection device (15) for detecting a voltage (U_{E}) between the two welding electrodes (11, 12) during welding with the welding tool (10),
wherein the control device (20) is configured to check the switching of the polarity by a comparison of the voltage (U_{E}) detected by the detection device (15) with a predetermined reference value of the voltage (U_{E}).

9. Resistance welding apparatus (2; 3; 3A, 4) according to any of the preceding claims, wherein the welding transformer (30) has two outputs (31, 33), at which a respective series circuit comprising two transistors (41, 42; 43, 44) is connected upstream of the welding tool (10) .

10. Resistance welding apparatus (2; 3; 3A, 4) according to any of the preceding claims, wherein the two transistors (41, 42; 43, 44) are metal oxide semiconductor field effect transistors.

11. Resistance welding apparatus (2; 3; 3A, 4) according to any of the preceding claims, wherein the welding tool (10) is welding tongs comprising two welding electrodes (11, 12), between which the at least one component (6, 7) is arranged during welding.

12. Installation (1) for the treatment of objects (5), comprising
a resistance welding apparatus (2; 3; 3A, 4) according to any of the preceding claims,
wherein the resistance welding apparatus (2; 3; 3A, 4) is provided for the resistance welding of at least one component (6, 7) provided for the treatment of at least one of the objects (5).

13. Installation (1) according to Claim 12, wherein the installation (1) is configured for the manufacture of vehicle bodies in white or radiators or chains as objects (5) .

14. Resistance welding method for the resistance welding of at least one component (6, 7) by means of a resistance welding apparatus (2; 3; 3A, 4), wherein the resistance welding apparatus (2; 3; 3A, 4) comprises a welding tool (10) comprising at least one welding electrode (11, 12) which is to be contacted with the at least one component (6, 7) for the purpose of welding, at least one welding transformer (30) for feeding an electric current to the welding tool (30) during the welding of the at least one component (6, 7), a series circuit comprising two transistors (41, 42; 43, 44), which are connected between the welding tool (10) and an output on the secondary side of the welding transformer (30), a polarity switching module (35), and a control device (20), **characterized in that** the resistance welding method comprises the steps of
transmitting, by means of the control device (20), polarity information (25A, 25B; 26A, 27A; 28A, 29A), which is linked with a power terminal (U₁) on the primary side of the at least one welding transformer (30), to the polarity switching module (35) in order to control the polarity of the at least one welding transformer (30), wherein the polarity information (25A, 25B; 26A, 27A; 28A, 29A) is information about how the polarity of the at least one welding transformer (30) is to be switched, and wherein the polarity switching module (35) is configured to evaluate the polarity information (25A, 25B; 26A, 27A; 28A, 29A) for the purpose of switching the polarity of the at least one welding transformer (30), and
switching, by means of the polarity switching module (35), the polarity of the welding transformer (30) using the two transistors (41, 42; 43, 44) by one of the transistors (41; 43) of the series circuit being switched being switched in a positively conducting fashion depending on the polarity information (25A, 25B; 26A, 27A; 28A, 29A) and a polarity preselection preset in the polarity switching module (35), and
switching in a negatively conducting fashion the other transistor (42; 44) of the series circuit during synchronous operation with electric current to the welding tool (10), as a result of which the polarity of said one transistor (42; 44) of the series circuit is rotated relative to the polarity of the other transistor (41; 43) of the series circuit in order to realize a polarity-switchable welding voltage (U21, U22) and a polarity-switchable welding current (12) at the welding transformer (30).

## Revendications

1. Dispositif (2 ; 3 ; 3A, 4) de soudage par résistance pour le soudage par résistance d'au moins un composant (6, 7), comprenant
un outil de soudage (10) avec au moins une électrode de soudage (11, 12), qui doit être mise en contact avec ledit au moins un composant (6, 7) pour le soudage,
au moins un transformateur de soudage (30) pour fournir un courant électrique à l'outil de soudage (10) lors du soudage dudit au moins un composant (6, 7),
un montage en série de deux transistors (41, 42 ; 43, 44) qui sont connectés entre l'outil de soudage (10) et une sortie sur le côté secondaire du transformateur de soudage (30),
**caractérisé en ce que** le transformateur de soudage (30) comprend un module (35) de commutation de polarité et le dispositif de soudage par résistance comprend un dispositif de commande (20) pour commander la polarité dudit au moins un transformateur de soudage (30) en envoyant au module (35) de commutation de polarité des informations de polarité (25A, 25B ; 26A, 27A ; 28A, 29A) associées à une borne de puissance (U₁) du côté primaire dudit au moins un transformateur de soudage (30),
les informations de polarité (25A, 25B ; 26A, 27A ; 28A, 29A) étant des informations sur la façon de commuter la polarité dudit au moins un transformateur de soudage (30),
le module (35) de commutation de polarité étant conçu pour évaluer les informations de polarité (25A, 25B ; 26A, 27A ; 28A, 29A) afin de commuter la polarité dudit au moins un transformateur de soudage (30), et
le module (35) de commutation de polarité étant conçu pour, en fonction de les informations de polarité (25A, 25B ; 26A, 27A ; 28A, 29A) et d'une présélection de polarité préréglée dans le module (35) de commutation de polarité, commuter un transistor (41 ; 43) du circuit en série en conduction positive en fonction du résultat d'évaluation et commuter l'autre transistor (42 ; 44) du circuit en série en conduction négative en mode synchrone en présence d'un courant électrique vers l'outil de soudage (10), grâce à quoi la polarité du premier transistor (42 ; 44) du circuit en série est tournée par rapport à la polarité de l'autre transistor (41 ; 43) du circuit en série, et de sorte que la polarité dudit au moins un transformateur de soudage (30) soit apte à être commutée pour réaliser une tension de soudage (U21, U22) à polarité commutable et un courant de soudage (12) à polarité commutable sur le transformateur de soudage (30) .

2. Dispositif (2 ; 3 ; 3A, 4) de soudage par résistance selon la revendication 1, dans lequel le dispositif de commande (20) est configuré pour fournir les informations de polarité (25A, 25B) dans une tension (U_{W}) qui est appliquée au côté primaire dudit au moins un transformateur de soudage (30).

3. Dispositif (2 ; 3 ; 3A, 4) de soudage par résistance selon la revendication 1 ou la revendication 2, dans lequel le dispositif de commande (20) est configuré pour fournir les informations de polarité (26A, 27A) sous forme de signal numérique.

4. Dispositif (2 ; 3 ; 3A, 4) de soudage par résistance selon l'une des revendications précédentes,
dans lequel le dispositif de commande (20) et ledit au moins un transformateur de soudage (30 ; 300) sont reliés par au moins une ligne (26, 27 ; 28, 29) en plus d'une connexion pour la tension (U_{W}) à appliquer au côté primaire dudit au moins un transformateur de soudage (30 ; 300), et
dans lequel le dispositif de commande (20) est conçu pour envoyer les informations de polarité (26A, 27A ; 28A, 29A) par l'intermédiaire de ladite au moins une ligne (26, 27 ; 28, 29) au module (35) de commutation de polarité pour commuter la polarité dudit au moins un transformateur de soudage (30 ; 300).

5. Dispositif (2 ; 3 ; 3A, 4) de soudage par résistance selon l'une des revendications précédentes,
dans lequel le module (35) de commutation de polarité est configuré pour évaluer les informations de polarité (25A ; 25B) dans une première impulsion de puissance provenant d'un convertisseur (22) vers ledit au moins un transformateur de soudage (30) au début d'un temps de soudage (T) pour réaliser une jonction de soudage (8) et pour commuter la polarité dudit au moins un transformateur de soudage (30) sur la base du résultat de l'évaluation.

6. Dispositif (2 ; 3 ; 3A, 4) de soudage par résistance selon l'une des revendications précédentes, dans lequel ledit au moins un transformateur de soudage (30) est formé par un montage en parallèle d'au moins deux transformateurs (30_1, 30_2).

7. Dispositif (2 ; 3 ; 3A, 4) de soudage par résistance selon la revendication 6, dans lequel le module (35) de commutation de polarité est configuré pour toujours commuter sur la même polarité tous lesdits au moins deux transformateurs (30_1, 30_2) montés en parallèle.

8. Dispositif (2 ; 3 ; 3A, 4) de soudage par résistance selon l'une des revendications précédentes,
comprenant en outre un dispositif de détection (15) pour détecter une tension (U_{E}) entre les deux électrodes de soudage (11, 12) lors du soudage avec l'outil de soudage (10),
le dispositif de commande (20) étant conçu pour vérifier l'inversion de la polarité par une comparaison de la tension (U_{E}) détectée par le dispositif de détection (15) avec une valeur de référence prédéterminée de la tension (UE).

9. Dispositif (2 ; 3 ; 3A, 4) de soudage par résistance selon l'une des revendications précédentes, dans lequel le transformateur de soudage (30) comporte deux sorties (31, 33) sur chacune desquelles un montage en série de deux transistors (41, 42 ; 43, 44) est connecté en amont de l'outil de soudage (10).

10. Dispositif (2 ; 3 ; 3A, 4) de soudage par résistance selon l'une des revendications précédentes, dans lequel les deux transistors (41, 42 ; 43, 44) sont des transistors à effet de champ métal-oxyde-semiconducteur.

11. Dispositif (2 ; 3 ; 3A, 4) de soudage par résistance selon l'une des revendications précédentes, dans lequel l'outil de soudage (10) est une pince de soudage comportant deux électrodes de soudage (11, 12) entre lesquelles ledit au moins un composant (6, 7) est disposé pendant le soudage.

12. Installation (1) pour le traitement d'objets (5), comprenant
un dispositif (2 ; 3 ; 3A, 4) de soudage par résistance selon l'une des revendications précédentes,
le dispositif (2 ; 3 ; 3A, 4) de soudage par résistance étant prévu pour souder par résistance au moins un composant (6, 7) prévu pour le traitement d'au moins un des objets (5).

13. Installation (1) selon la revendication 12, l'installation (1) étant configurée pour la fabrication de carrosseries brutes de véhicules ou de radiateurs ou de chaînes en tant qu'objets (5).

14. Procédé de soudage par résistance pour le soudage par résistance d'au moins un composant (6, 7) au moyen d'un dispositif (2 ; 3 ; 3A, 4) de soudage par résistance, le dispositif (2 ; 3 ; 3A, 4) de soudage par résistance comprenant un outil de soudage (10) avec au moins une électrode de soudage (11, 12) qui doit être mise en contact avec ledit au moins un composant (6, 7) pour le soudage, au moins un transformateur de soudage (30) pour fournir un courant électrique à l'outil de soudage (30) lors du soudage dudit au moins un composant (6, 7), un circuit en série de deux transistors (41, 42 ; 43, 44) connectés entre l'outil de soudage (10) et une sortie sur le côté secondaire du transformateur de soudage (30), un module (35) de commutation de polarité, et un dispositif de commande (20), **caractérisé en ce que** le procédé de soudage par résistance comprend les étapes consistant à
envoyer, avec le dispositif de commande (20), au module (35) de commutation de polarité, des informations de polarité (25A, 25B ; 26A, 27A ; 28A, 29A) associées à une borne d'alimentation (U₁) sur le côté primaire dudit au moins un transformateur de soudage (30) pour commander la polarité dudit au moins un transformateur de soudage (30), les informations de polarité (25A, 25B ; 26A, 27A ; 28A, 29A) étant des informations sur la manière de commuter la polarité dudit au moins un transformateur de soudage (30), et le module (35) de commutation de polarité étant conçu pour évaluer les informations de polarité (25A, 25B ; 26A, 27A ; 28A, 29A) afin de commuter la polarité dudit au moins un transformateur de soudage (30), et
commuter, au moyen du module (35) de commutation de polarité, la polarité du transformateur de soudage (30) en utilisant les deux transistors (41, 42 ; 43, 44) en rendant l'un des transistors (41 ; 43) du circuit en série positivement conducteur en fonction des informations de polarité (25A, 25B ; 26A, 27A ; 28A, 29A) et d'une présélection de polarité préétablie dans le module (35) de commutation de polarité, et
commuter en conduction négative l'autre transistor (42 ; 44) du circuit en série en mode synchrone avec un courant électrique vers l'outil de soudage (10), ce qui fait tourner la polarité de l'un des transistors (42 ; 44) du circuit en série par rapport à la polarité de l'autre transistor (41; 43) du circuit en série, afin de réaliser une tension de soudage (U21, U22) à polarité commutable et un courant de soudage (12) à polarité commutable aux bornes du transformateur de soudage (30).
